# EUROPÄISCHE PATENTANMELDUNG

(11) **EP 1 002 697 A2**
(43) Veröffentlichungstag der Anmeldung: **24.05.2000**
(21) Anmeldenummer: 99120959.4
(22) Anmeldetag: 03.11.1999
(51) Int. Cl.: B60Q 3/02

(54) **Innenleuchteneinheit für Kraftfahrzeuge**

(30) Priorität: 17.11.1998 DE 19852998
(71) Anmelder: Volkswagen Aktiengesellschaft, 38436 Wolfsburg (DE)
(72) Erfinder: Müller, Michael, 38518 Gifhorn (DE); Bischoff, Klaus, 38173 Evessen (DE); Reim, Ernst, 38102 Braunschweig (DE)

(57) **Zusammenfassung**

Die Erfindung betrifft eine Leuchteneinheit (1) für Kraftfahrzeuge, umfassend mindestens zwei Leuchten (L1 - L4), deren Abstrahlcharakteristik durch eine Verstelleinrichtung (4) veränderbar ist und durch mindestens ein Schaltelement wahlweise ein- oder ausschaltbar ist, wobei den Leuchten (L1 - L4) ein Leuchtenauswahlschalter (2) und ein gemeinsames Bedienelement (B1, B2) zugeordnet sind, dessen Steuersignale der Verstelleinrichtung (4) der über den Leuchtensauswahlschalter (2) wahlweise ausgewählten Leuchte (L1 - L4) zuführbar sind.

## Beschreibung

Die Erfindung betrifft eine Leuchteneinheit für ein Kraftfahrzeug gemäß dem Oberbegriff des Patentanspruchs 1.

Eine derartige Leuchteneinheit ist aus der DE 37 30 284 A1 bekannt. Dabei sind in dem Leuchtengehäuse ein oder zwei Leuchten und eine Leuchte für die allgemeine Innenraumbeleuchtung integriert. Die als Leseleuchten verwendbaren Leuchtenköpfe sind häufig über einen kardanisch wirkenden Halter in alle Richtungen schwenkbar. Die in dem Leuchtengehäuse integrierte Leuchte zur allgemeinen Innenraumbeleuchtung weist eine Lampe und deren Halte- und Kontakteinrichtungen auf, wobei die Lampe über einen Schalter oder die Türkontakte des Kraftfahrzeuges einschaltbar ist. Alternativ zum kardanischen Halter ist es auch bekannt, die Abstrahlcharakteristik einer Innenleuchte durch verstellbare Blenden, Reflektoren oder Schirme zu verändern. Nachteilig an den bekannten Innenleuchten ist, daß diese nur manuell verstellbar sind. So kann beispielsweise die Leseleuchte des Beifahrers den Kraftfahrzeugführer blenden. Eine manuelle Verstellung durch den Fahrer ist jedoch während der Fahrt kaum möglich, ohne daß der Fahrer in seiner Konzentration und Aufmerksamkeit gestört wird. Daher kann nur der Beifahrer iterativ die Leuchte verstellen und den Kraftfahrzeugführer jeweils nach seinem Befinden befragen. Des weiteren sind auch Situationen denkbar, wo der Kraftfahrzeugführer während der Fahrt die ihm zugeordnete Leuchte einschalten möchte, beispielsweise um eine heruntergefallene brennende Zigarette zu suchen. Eine Verstellung der Leuchte durch den Kraftfahrzeugführer oder den Beifahrer führt dann ebenfalls zu einer starken Ablenkung des Fahrers.

Ferner sind außen am Fahrzeug angeordnete Leuchten oder Scheinwerfer bekannt, deren Abstrahlcharakteristik ebenfalls veränderbar ist. Dazu zählen beispielsweise Scheinwerfer mit Leuchtweitenregulierung bzw. Scheinwerfer, deren Abstrahlwinkel verstellt werden kann, um bestimmte Beladungszustände zu berücksichtigen, Suchscheinwerfer oder Umfeldbeleuchtungen.

Der Erfindung liegt daher das technische Problem zugrunde, eine Leuchteneinheit für ein Kraftfahrzeug zu schaffen, die einfach und übersichtlich ansteuerbar ist.

Die Lösung des technischen Problems ergibt sich durch die Merkmale des Patentanspruchs 1. Dabei wird den Leuchten ein Leuchtenauswahlschalter und ein gemeinsames Bedienelement zugeordnet, denen Steuersignale der Verstelleinrichtung der über den Leuchtenauswahlschalter wahlweise ausgewählten Leuchte zuführbar sind, wodurch von einer zentralen Stelle sehr einfach jede Leuchte unabhängig von ihrer räumlichen Anordnung innerhalb des Kraftfahrzeuges verstellt werden kann. Durch die Verwendung eines gemeinsamen Bedienelementes bleibt die Verstellung auch bei einer großen Anzahl von Leuchten sehr übersichtlich. Weitere vorteilhafte Ausgestaltungen der Erfindung ergeben sich aus den Unteransprüchen.

In einer bevorzugten Ausführungsfom, ist den zugeordneten Bereichen einer Leuchte auf dem Auswahlschalter zusätzlich der Ein-Aus-Schalter zugeordnet. Dadurch kann der Fahrer oder Beifahrer auch jede Leuchte ein- und ausschalten, beispielsweise um die Leseleuchte eines eingeschlafenen Fahrzeuginsassen auf der Rückbank auszuschalten oder aber nach dem Befinden von Kindern auf der Rückbank zu schauen.

Um die gedankliche und visuelle Zuordnung zwischen Auswahlschalter und Leuchten zu erhöhen, werden die den Leuchten zugeordneten Segmente des Auswahlschalters entsprechend der räumlichen Anordnung der Leuchten im Kraftfahrzeug vorgenommen. Vorzugsweise ist das Bedienelement als stufenloses Stellelement, wie beispielsweise als Drehknopf oder Trackball, ausgebildet, was eine sehr einfache und individuelle Einstellung der Leuchten ermöglicht.

Die Abstrahlcharakteristik, gekennzeichnet durch die Helligkeit und/oder Richtung des Lichtkegels, kann durch das Bedienelement auf einfache Art und Weise verändert werden.

In einer Speichereinrichtung können Daten abgelegt sein, die eine vorgegebene Soll-Abstrahlcharakteristik definieren, wobei durch Abrufen der Daten die Soll-Abstrahlcharakteristik automatisch eingestellt wird. Die Soll-Abstrahlcharakteristik kann z. B. personenbezogen sein, so daß jeder Benutzer des Fahrzeugs seine Soll-Abstrahlcharakteristik einmalig einstellt und anschließend in der Speichereinrichtung, wie z. B. einer Chipkarte, speichert. Der Aufruf der personenbezogenen Daten erfolgt dann durch das Auslesen der Chipkarte oder indem der Fahrzeugführer durch die Eingabe eines persönlichen Codes identifiziert wird, und anschließend die personenbezogenen Daten aus der Speichereinrichtung ausgelesen werden.

In der Soll-Abstrahlcharakteristik kann z. B. die Beleuchtung eines Aschenbechers, eine bestimmte Helligkeit, Beleuchtung von Ablagefächern einzelner Geräte oder Anzeigen vorgesehen werden. Bei Bedarf kann die Soll-Abstrahlcharakteristik durch Veränderung der Abstrahlcharakteristik und erneute Speicherung auch verändert werden. Die Soll-Abstrahlcharakteristik ist in einer bevorzugten Ausführung für verschiedene Fahrzeugzustände definiert. Solche können z. B. die Fahrzeuggeschwindigkeit, Zündschlüssel gesteckt, Türen geöffnet oder die Gangwahl sein. Beim Einlegen des Rückwärtsganges können z. B. automatisch die Leuchten im hinteren Bereich ausgeschaltet werden, um Spiegelungen zu vermeiden und dem Fahrer möglichst freie Sicht, durch die rückwärtige Scheibe zu bieten.

Denkbar wäre auch die Soll-Abstrahlcharakteristik in Abhängigkeit von Tageszeit, Jahreszeit, Umgebungshelligkeit, Sitzplatzbelegung zu steuern.

Besonders kompakt lassen sich Auswahlschalter und Bedienelement realisieren, wenn die Segmente des Auswahlschalters konzentrisch um das Bedienelement herum angeordnet sind.

Die Erfindung wird anhand eines bevorzugten Ausführungsbeispiels näher erläutert. Die Fig. zeigen:

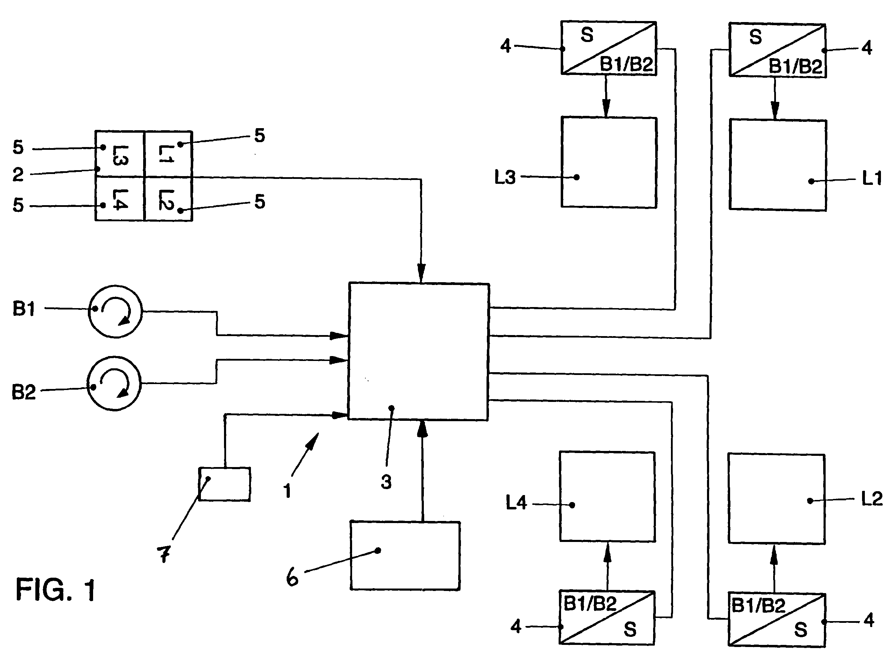

- Fig. 1: ein schematisches Blockschaltbild einer Leuchteneinheit und
- Fig. 2: eine Draufsicht auf einen Leuchtenauswahlschalter mit integriertem Bedienelement.

Die Leuchteneinheit 1 umfaßt einen Leuchtenauswahlschalter 2, zwei Bedienelemente B1, B2, einen Multiplexer 3 und vier Leuchten L1 - L4, denen jeweils ein Schalt - und Verstellelement 4 zugeordnet ist. Dabei ist beispielsweise die Leuchte L1 dem Kraftfahrzeugführer, die Leuchte L2 dem Beifahrer, die Leuchte L3 dem rückwärtigen Insassen hinter dem Kraftfahrzeugführer und die Leuchte L4 dem rückwärtigen Insassen hinter dem Beifahrer zugeordnet. Der Leuchtenauswahlschalter 2 ist entsprechend der Anzahl der Leuchten L1 - L4 in vier Segmente 5 unterteilt, wobei jedem Segment 5 genau eine Leuchte L1 - L4 zugeordnet ist. Die Anordnung der Segmente 5 entspricht dabei genau der räumlichen Anordnung der Leuchten L1 - L4 im Kraftfahrzeug. Die beiden Bedienelemente B1, B2 sind als stufenlose Stellelemente ausgebildet, wobei mittels des Bedienelementes B1 die Abstrahlcharakteristik der Leuchten L1 - L4 und mittels des Bedienelementes B2 die Lichtleistung dimmbar ist. Die Leuchten L1 - L4 sind beispielsweise kardanisch gelagen und/oder mit verstellbaren Blenden ausgebildet, so daß die Abstrahlcharakteristik der Leuchten L1 - L4 veränderbar ist. Über das Schalt- und Stellelement 4 sind die Leuchten L1 - L4 manuell ein- und ausschaltbar sowie manuell in ihrer Abstrahlcharakteristik verstellbar. Zusätzlich können die Leuchten L1 - L4 zentral über die Bedienelemente B1, B2 verstellt werden. Dazu werden die Stellsignale der Bedienelemente B1, B2 auf die Dateneingänge des Multiplexers 3 gelegt, an dessen Steuereingang der Signalausgang des Leuchtenauswahlschalters 2 liegt. Der Leuchtenauswahlschalter 2 und die Bedienelemente B1, B2 sind vorzugsweise im Mittelbereich der Konsole angeordnet, so daß diese sowohl für den Kraftfahrzeugführer als auch für den Beifahrer gut zugänglich sind. Der Leuchtenauswahlschalter 2 dient darüber hinaus als zentrales Ein- und Ausschaltelement für jede Leuchte L1 - L4. Zur zentralen Verstellung der Leuchten L1 - L4 ist das Schalt- und Stellelement 4 mit einer elektrischen Stelleinrichtung ausgebildet, die beispielsweise als elektrischer Getriebemotor oder als Schrittmotor ausgebildet ist.

Möchte nun beispielsweise der Beifahrer die Leuchte L4 einschalten, so kann dies durch ein Doppel-Drücken des zugeordneten Segments 5 des Leuchtenauswahlschalters geschehen. Ebenso kann die Leuchte L4 wieder ausgeschaltet werden. Ist die Leuchte L4 bereits eingeschaltet, so genügt ein einfaches Antippen des zugehörigen Segments 5, und die Signalleitungen der Bedienelemente B1, B2 werden über den Multiplexer 3 auf das Schalt- und Stellelement 4 der Leuchte L4 geschaltet. Über die Bedienelemente B1, B2 kann dann die gewünschte Abstrahlcharakteristik bzw. Helligkeit der Leuchte L4 eingestellt werden.

Neben der manuellen Einstellbarkeit ist im Automatikbetrieb, auch das Auslesen von einer Soll-Abstrahlcharakteristik definierenden Daten, in der Speichereinrichtung 6 vorgesehen. Die Daten werden aufgerufen, wenn über bestimmte Sensoren 7 Fahrzeugzustände erkannt werden, und entsprechende Signale an den Multiplexer 3 zum Auslesen der Daten gegeben werden. Alternativ wäre auch die Eingabe der Daten über eine Chipkarte möglich. In diesem Fall könnte dann die Speichereinrichtung 6 und der Sensor 7 durch ein nicht dargestelltes Chipkartenlesegerät ersetzt werden. Der Aufruf der Daten aus der Speichereinrichtung könnte auch erfolgen, indem der Fahrzeugführer z. B. über eine Personenerkennung erkannt wird. So sind bereits heute Systeme bekannt, bei denen die individuelle Sitzposition, Stellung des Lenkrades o. ä. personenbezogen speicherbar sind. In einem solchen Speicher könnte nun die individuell gewünschte Abstrahlcharakteristik der Innenbeleuchtung oder Umfeldbeleuchtung ebenfalls gespeichert sein.

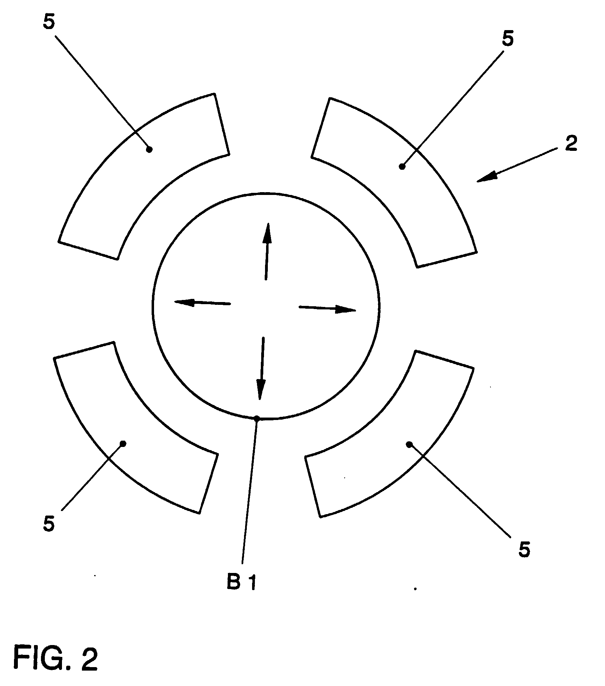

In der Fig. 2 ist eine Ausführungsform des Leuchtenauswahlschalters 2 mit integriertem Bedienelement B1 dargestellt. Dazu sind die Segmente 5 des Leuchtenauswahlschalters 2 als Kreisringsegmente ausgebildet, die konzentrisch um das Bedienelement B1 angeordnet sind, wodurch eine optimale räumliche Zuordnung zwischen Leuchtenauswahlschalter 2 und Bedienelement B1 realisiert wird. Die räumliche Anordnung der den Leuchten L1 - L4 zugeordneten Segmente 5 entspricht vorzugsweise wieder der räumlichen Anordnung der Leuchten L1 - L4 im Kraftfahrzeug.

## Patentansprüche

1. Leuchteneinheit für Kraftfahrzeuge, umfassend mindestens zwei Leuchten, deren Abstrahlcharakteristik durch eine Verstelleinrichtung veränderbar ist und durch mindestens ein Schaltelement wahlweise ein- oder ausschaltbar ist,
dadurch gekennzeichnet, daß
den Leuchten (L1 - L4) ein Leuchtenauswahlschalter (2) und ein gemeinsames Bedienelement (B1, B2) zugeordnet sind, dessen Steuersignale der Verstelleinrichtung (4) der über den Leuchtenauswahlschalter (2) wahlweise ausgewählten Leuchte (L1 - L4) zuführbar sind.

2. Leuchteneinheit nach Anspruch 1, dadurch gekennzeichnet, daß das jeweilige Schaltelement der Leuchte (L1 - L4) in das jeweils zugeordnete Segment (5) im Leuchtenauswahlschalter (2) integriert ist.

3. Leuchteneinheit nach Anspruch 1 oder 2, dadurch gekennzeichnet, daß die den Leuchten (L1 - L4) im Kraftfahrzeug zugeordneten Segmente (5) des Auswahlschalters (2) entsprechend der räumlichen Verteilung der Leuchten (L1 - L4) im Kraftfahrzeug angeordnet sind.

4. Leuchteneinheit nach einem der vorangegangenen Ansprüche, dadurch gekennzeichnet, daß das Bedienelement (B1, B2) als stufenloses Stellelement ausgebildet ist.

5. Leuchteneinheit nach einem der vorangegangenen Ansprüche, dadurch gekennzeichnet, daß eine durch Daten definierte Soll-Abstrahlcharakteristik vorgesehen ist und die die Soll-Abstrahlcharakteristik in einer Speichereinrichtung abgelegt sind.

6. Leuchteneinheit nach Anspruch 5, dadurch gekennzeichnet daß die Daten definierten Fahrzeugzuständen zugeordnet sind und bei Sensierung einer der Fahrzeugzustände ausgelesen werden.

7. Leuchteneinheit nach Anspruch 5 oder 6, dadurch gekennzeichnet, daß die Daten personenbezogen sind.

8. Leuchteneinheit nach Anspruch 5, 6 oder 7, dadurch gekennzeichnet, daß die Speichereinrichtung eine Chipkarte ist.

9. Leuchteneinheit nach einem der Ansprüche 5 bis 8, dadurch gekennzeichnet, daß durch Verändern der Abstrahlcharakteristik und Speicherung der veränderten Abstrahlcharakteristik die Soll-Abstrahlcharakteristik veränderbar ist.

10. Leuchtenelement nach einem der vorangegangenen Ansprüche, dadurch gekennzeichnet, daß die Segmente (5) des Leuchtenauswahlschalters (2) konzentrisch um das Bedienelement (B1, B2) herum angeordnet sind.
